# EUROPEAN PATENT APPLICATION

(11) **EP 4 506 560 A1**
(43) Date of publication of application: **12.02.2025**
(21) Application number: 23190319.6
(22) Date of filing: 08.08.2023
(51) Int. Cl.: F03D 7/02, F03D 7/04, B63B 35/44

(54) **METHOD FOR OPERATING AN OFFSHORE WIND FARM AND WIND FARM**

(71) Applicant: Siemens Gamesa Renewable Energy A/S, 7330 Brande (DK)
(72) Inventor: Enevoldsen, Peder Bay, 7100 Vejle (DK); Hawkins, Samuel, 7100 Vejle (DK)
(74) Representative: SGRE-Association

(57) **Abstract**

The present invention relates to a method (100) for operating an offshore wind farm (200) comprising a plurality of floating offshore wind turbines (201 - 225, A - F), the method (100) comprising:
- Installing the plurality of wind turbines (201 - 225, A - F) in a start arrangement in which each wind turbine (201 - 225, A - F) faces a certain load with respect to a predominant wind direction and
- rearranging the plurality of wind turbines (201 - 225, A - F) by swapping positions of at least two wind turbines of the plurality of wind turbines (201 - 225, A - F),
wherein the at least two wind turbines comprise a high performer wind turbine faced with the highest load of all wind turbines of the plurality of wind turbines (201 - 225, A - F) and a low performer wind turbine faced with a load lower than the highest load of all wind turbines (201 - 225, A - F), such that a load over time is lowered for the high performer wind turbine compared to a load over time without swapping positions of the at least two wind turbines.

## Description

### FIELD OF THE INVENTION

The present invention relates to a method for operating a wind farm and a wind farm comprising a plurality of floating offshore wind turbines according to the accompanying claims.

### BACKGROUND

Wind farms, i.e., wind parks, include multiple wind turbines for producing electrical energy at a certain location that faces wind from a predominant wind direction.

The wind from the predominant wind direction results in a load, i.e., a mechanical stress, that is higher for particular wind turbines located in an outer area of the wind farm facing the wind first, than for wind turbines located in the middle of the wind farm or other areas covered by the wind turbines located in the outer area. Thus, the load differs between particular wind turbines of a wind farm.

When designing structural elements of the wind turbine, in particular a support structure, which includes a tower and a foundation, a designer uses the most heavily loaded turbine positions in a wind farm to determine the design loads that each wind turbine of the wind farm needs to be able to accommodate. Because the wind farm typically uses the same structural component design across the wind farm, this design results in wind turbines that are relatively over-designed for locations facing a relatively low load in a wind farm. This over-design results in high weights of the wind farm and in high costs and reduces the economic benefit of a wind farm.

It is therefore an objective problem to provide for a wind farm that is both light-weighted and economical.

According to an aspect, this problem is solved by providing a method for operating an offshore wind farm comprising a plurality of floating offshore wind turbines.

The method disclosed herein comprises installing the plurality of wind turbines in a start arrangement in which each wind turbine faces a certain load with respect to a predominant wind direction, and rearranging the plurality of wind turbines by swapping positions of at least two wind turbines of the plurality of wind turbines, wherein the at least two wind turbines comprise a high performer wind turbine faced with the highest load of all wind turbines of the plurality of wind turbines and a low performer wind turbine faced with a load lower than the highest load of all wind turbines, such that a load over time is lowered for the high performer wind turbine compared to a load over time without swapping positions of the at least two wind turbines.

In the context of the present invention, swapping position of at least two wind turbines means exchanging the locations of the at least two wind turbines. Thus, a first wind turbine that is located on a first position in a start arrangement is relocated to a second position in a relocated arrangement, at which in the start arrangement, a second wind turbine was located. Accordingly, the second wind turbine, which was located at the second position in the start arrangement, is relocated to the first position in the relocated arrangement.

In the context of the present invention, a predominant wind direction is a direction in which a wind force is the strongest most of the time.

The present invention is based on the principle that particular wind turbines of a wind farm are arranged in a start arrangement at a first time and rearranged by swapping positions of the wind turbines at a second time after the first time. Thus, at the second time, the wind turbines are arranged in a relocated arrangement. Of course, multiple rearrangements resulting in a plurality of relocated arrangements may follow after the second time.

By re-arranging the wind turbines of a wind farm in a relocated arrangement, i.e., by swapping positions between particular wind turbines of the wind farm, an average load on each of the wind turbines is equalized. Thus, the highest average load for which all the wind turbines have to be designed, is minimized. Accordingly, the wind turbines can be designed lighter and can be run more economically than wind turbines in a traditional fixed arrangement.

According to an embodiment, rearranging comprises towing each of the at least two of the wind turbines with at least one vessel or motor from a starting position to a target position.

Since the method disclosed herein is based on an off-shore wind farm, wind turbines of the wind farm include floating foundations floating on water and are kept in position by using an anchor point, such as a mooring line and/or an inter-array connection cable, for example. Thus, by disconnecting the wind turbines from the anchor point, the wind turbine becomes freefloating and can be towed away by using a vessel or a motor, such as a winch, for example.

Thus, a particular wind turbine may be moved by an external force. Additionally, or alternatively, a particular wind turbine may be moved by an internal force, such as a motor and a propeller attached to the wind turbine.

Buoys may be used to keep pick-up lines available at the surface, so that when a wind turbine is towed to the position, the wind turbine can be connected to the anchor point easily.

According to another embodiment, the at least two wind turbines comprise a number of first wind turbines facing the highest load of the plurality of wind turbines, the positions of which are swapped with a number of second wind turbines facing the lowest load of the plurality of wind turbines, such that each of the first wind turbines faces the highest load level within the plurality of wind turbines only for a portion of the life of the wind farm.

By swapping positions between wind turbines located at positions facing the highest load within a wind farm and wind turbines facing the lowest load within the wind farm, the average load on each of the wind turbines is equalized.

Moreover, by swapping positions between wind turbines located at positions facing the highest load within a wind farm and wind turbines facing the lowest load within the wind farm, wind turbines facing a medium load that is between the highest load and the lowest load do not have to be moved in order to equalize the load for each of the wind turbines, thereby minimizing the effort of running the wind farm. Such a swapping may be carried out at a point in time mid-way through the operational life of the wind farm.

According to another embodiment, a number of wind turbines facing the highest load of the plurality of wind turbines is split into different arrangement groups, wherein each arrangement group contains a number of wind turbines facing a lower load of the plurality of wind turbines than the wind turbines facing the highest load of the plurality of wind turbines, such that swapping of turbines facing the highest load of the plurality of wind turbines with each other is prevented.

Identifying an arrangement group may involve identifying n-positions containing the highest and lowest loaded positions. Thus, n-1 rotations among these positions may be made over the lifetime of the wind farm, so that each wind turbine only experiences the highest load level within the group for a portion of the life of the wind farm. This may be advantageous as splitting the time 50/50 between the highest loaded and lowest loaded potions may not result in a load level matching the median loaded position on the site. This is because fatigue loading may accumulate much more rapidly at the highest loaded positions than at the moderate and lowest loaded positions, such that the median loaded position is closer to the load levels of the lowest loaded position than it is to the highest loaded position.

More than one arrangement group may be used, so that if there are multiple highly loaded positions, they do not end up being rotated to another high loaded position as part of a single large grouping. Thus, the highest loaded turbines are split into different rotation groups that also contain low-loaded positions.

According to an embodiment, wind turbines are swapped in their positions multiple times during the lifetime of the wind farm.

By swapping particular wind turbines in their positions multiple times during the lifetime of the wind farm, changes in the predominant wind direction are compensated. By swapping the wind turbine at a location facing the highest load with a wind turbine at a location facing the lowest load multiple times in a row, the time that a particular wind turbine is run at the position facing the highest load, is minimized.

According to another embodiment, the load of each wind turbine is determined by using load sensors attached to the wind turbines and/or by using a mathematical model of the plurality of wind turbines.

The load acting on the wind turbines of the wind farm may not be identical to the predominant wind direction. Thus, load sensors may be used in order to identify a particular wind turbine facing a particular load, in particular the highest or lowest load of all wind turbines in the wind farm.

The frequency of relocations and the schema or re-arrangement to be used are therefore the outcome of a cost optimization balancing the savings associated with the design load reduction with the operational costs of performing relocation activities. To do this, the experienced loads of the wind turbines are either monitored during the wind farm construction and operational life, or historical environmental data would be used to estimate the load levels experienced by the wind turbines, making use of load-modelling tools and/or digital twins.

Additionally, and/or optionally, the lifetime of the wind farm may be extended by swapping positions between the highest loaded wind turbines - which are the limiting factor on the life of the overall wind farm - with turbines at lower loaded positions. To allow for lifetime extension, assessment of the loading experienced by the wind turbines may be used through either direct monitoring or load modelling using environmental data as input.

According to another embodiment, the at least two wind turbines to be swapped are selected from the plurality of wind turbines such that a mechanical stress of all wind turbines of the plurality of wind turbines is minimized.

A cost function may be used that includes a term for minimizing the mechanical stress of all wind turbines of the wind farm to find a particular scheme for rearrangement of the wind turbines.

According to another embodiment, swapping positions of at least two wind turbines of the plurality of wind turbines includes towing at least one of the at least two wind turbines to a port for mechanical service.

By swapping positions with a wind turbine that is towed to a port for mechanical service, the effort for rearrangement of the wind turbines is minimized. In other words, the circumstance that a particular wind turbine is already towed away may be used for carrying out a rearrangement of the wind farm.

According to another embodiment, location identification marks of two wind turbines swapping positions are exchanged between these two wind turbines.

In order to avoid misidentification of a particular wind turbine in a wind farm, exchangeable identification marks, such as tags, may be exchanged between swapped wind turbines. In particular, an identification mark may be fixed to a location.

According to another embodiment, the method further comprises constructing structural elements of each wind turbine of the wind farm for a load lower than the highest load, in particular between 50 % and 90% of the highest load, of all wind turbines of the wind farm.

By constructing structural elements of each wind turbine of the wind farm for a load lower than the highest load, in particular between 50 % and 90% of the highest load, of all wind turbines of the wind farm, the weight and the costs of a wind farm are minimized.

Additionally, and/or alternatively, the method may be used for feeding electrical and/or chemical energy to an electric and/or chemical grid, wherein the method comprises the following steps:
- executing steps of an embodiment or of a combination of embodiments of a method as disclosed supra,
- generating, by the wind turbine, electrical power and/or electrical energy, and in particular generating at least partially from the electrical energy, further in particular by transforming electrical energy into hydrogen by electrolysis, chemical energy in form of a gas or liquid, in particular in the form of hydrogen,
- transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction, and
- supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

According to a second aspect, the present invention relates to a wind farm comprising a plurality of floating offshore wind turbines, wherein structural elements of each wind turbine of the wind farm are constructed for the same load, wherein the load is lower than the highest load of all wind turbines of the wind farm, in particular between 50 % and 90% of the highest load of all wind turbines of the wind farm.

It is to be understood that the features mentioned above, for example the swapping of wind turbines of a wind farm, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 shows an embodiment of the method disclosed herein,
Fig. 2 shows the method according to fig. 1 in detail, based on an embodiment of the wind farm disclosed herein,
Fig. 3 shows a further embodiment of the method disclosed herein,
Fig. 4 shows a further embodiment of the method disclosed herein,
Fig. 5 shows a further embodiment of the method disclosed herein,
Fig. 6 shows a further embodiment of the method disclosed herein, and
Fig. 7 shows a further embodiment of the method disclosed herein.

### DETAILED DESCRIPTION

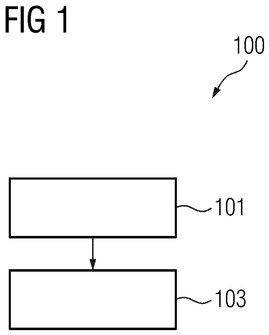

In fig. 1, a method 100 for operating an offshore wind farm comprising a plurality of floating offshore wind turbines is shown.

The method 100 comprises an installation step 101, in which the plurality of wind turbines are installed in a start arrangement in which each wind turbine faces a certain load with respect to a predominant wind direction, and a rearranging step 103, in which the plurality of wind turbines are rearranged by swapping positions of at least two wind turbines of the plurality of wind turbines.

The at least two wind turbines comprise a high performer wind turbine faced with the highest load of all wind turbines of the plurality of wind turbines and a low performer wind turbine faced with a load lower than the highest load of all wind turbines, such that a load over time is lowered for the high performer wind turbine compared to a load over time without swapping positions of the at least two wind turbines.

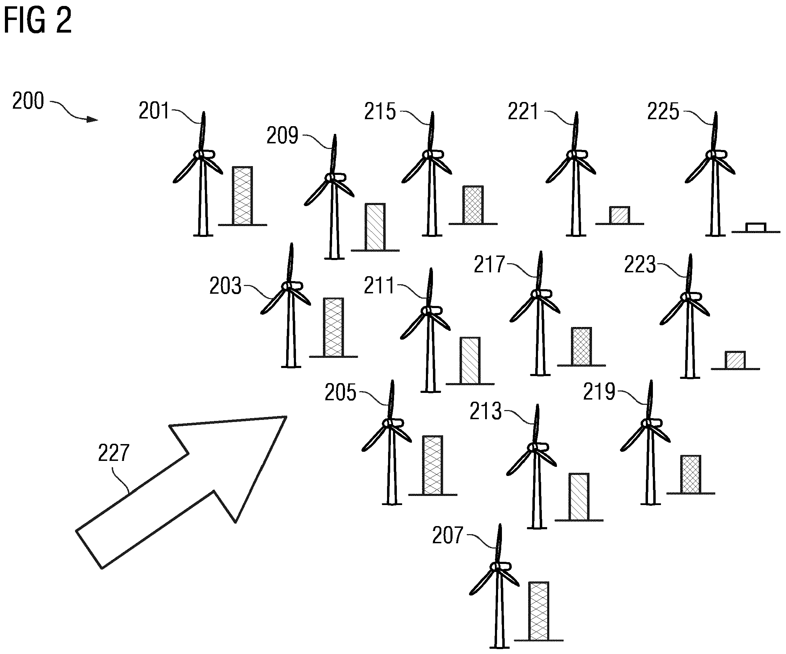

In fig. 2, a wind farm 200 is shown. The wind farm 200 comprises a plurality of wind turbines 201 - 225. An arrow 227 indicates a predominant wind direction.

Bars of the particular wind turbines 201 - 225 indicate a load, i.e., a level of mechanical stress caused by the wind to each of wind turbines 201 - 225. Thus, wind turbines 201, 203, 205 and 207 face the highest load, whereas wind turbine 225 faces the lowest load.

By swapping positions between wind turbine 225 and wind turbine 201, the average load over the lifetime of wind turbine 201 is lowered, and the average load of wind turbine 225 is increased. Thus, wind turbine 201 can be designed for an average load over lifetime that is lower than a load over time without swapping positions. This means, wind turbine 201 can be designed lighter and more cost efficient than a fixed position wind turbine at the location of wind turbine 201.

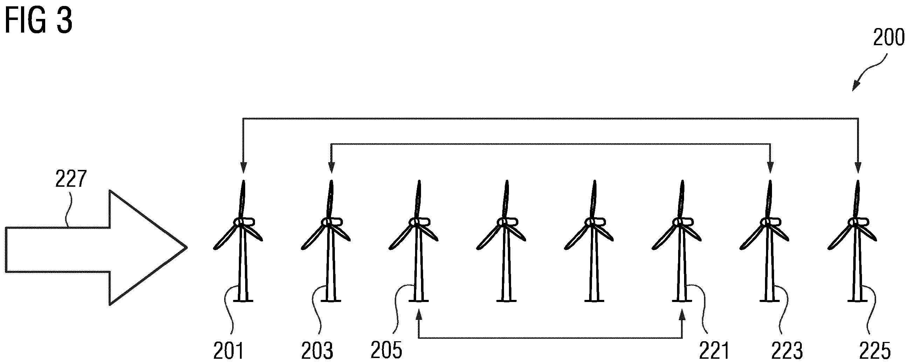

In fig. 3, a so-called high-to-low swap is shown, where at a point in time mid-way through the operational life of the wind farm 200, the positions of the n-highest loaded turbines, for example 201, 203 and 205, and the positions of the n-lowest loaded turbines, for example 225, 223 and 221, are swapped, where n ≥ 1. Thus, even if only one position swap is made, the loading of the worst-loaded position is split between two different wind turbines already. If a common design is made for the entire wind farm 200, then just this one swap can lower wind turbine material and construction costs.

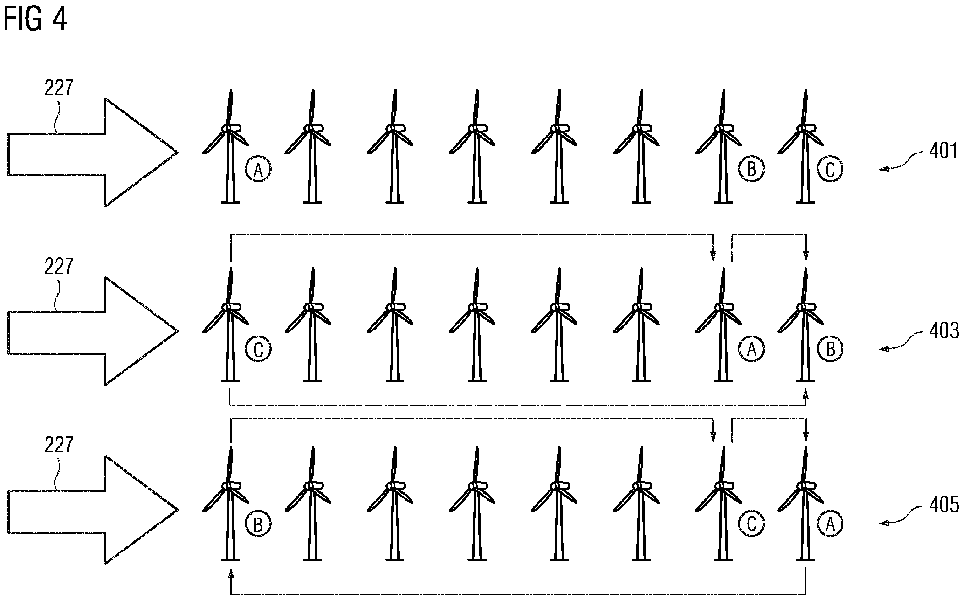

In fig. 4, n-positions containing the highest and lowest loaded positions are identified. Over the lifetime of the wind farm 200, n-1 rotations within a group of multiple wind turbines A, B and C of the group are made so that each turbine only experiences the highest load level for a portion of the life of the wind farm 200. It may be advantageous to splitting the time 50/50 between the highest loaded and lowest loaded potions, like in the high-to-low swap according to fig. 3, as otherwise, the rotation may not result in a load level matching the median loaded position on the site. This is because fatigue loading may accumulate much more rapidly at the highest loaded positions than at the moderate and lowest loaded positions, such that the median loaded position is closer to the load levels of the lowest loaded position than it is to the highest loaded position.

Row 401 shows a start arrangement, row 403 shows a rearrangement after a first rotation involving multiple swaps, and row 405 shows a rearrangement after a second rotation involving multiple swaps.

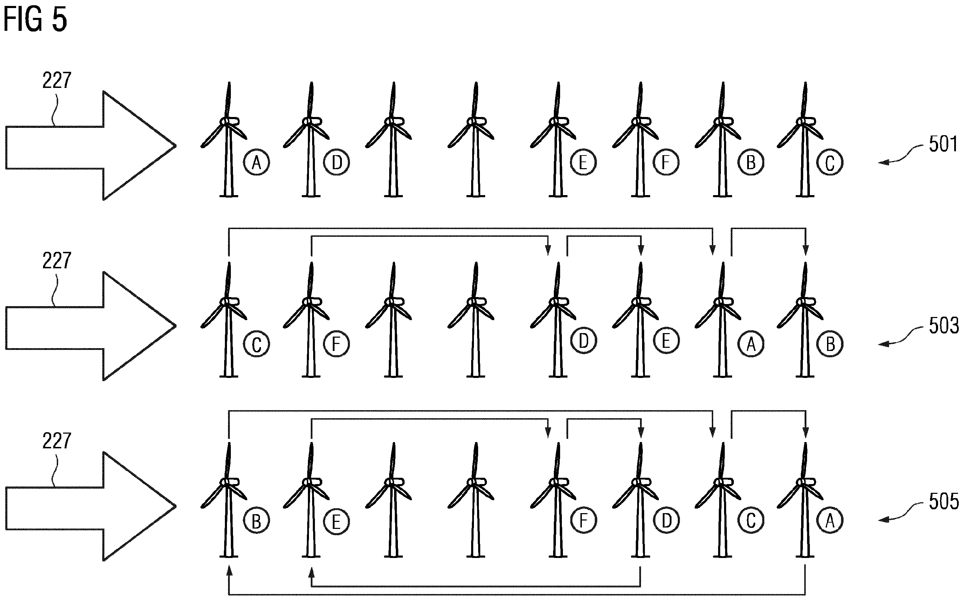

In fig. 5, a first group containing wind turbines A, B and C and a second group containing wind turbines D, E and F are used, so that, if there are multiple highly loaded positions, they do not end up being rotated to another high loaded position as part of a single large grouping.

Thus, the highest loaded turbines A and D are split into different rotation groups that also contain low-loaded positions.

Here, row 501 shows a start arrangement, row 503 shows a rearrangement after a first rotation involving multiple swaps, and row 505 shows a rearrangement after a second rotation involving multiple swaps.

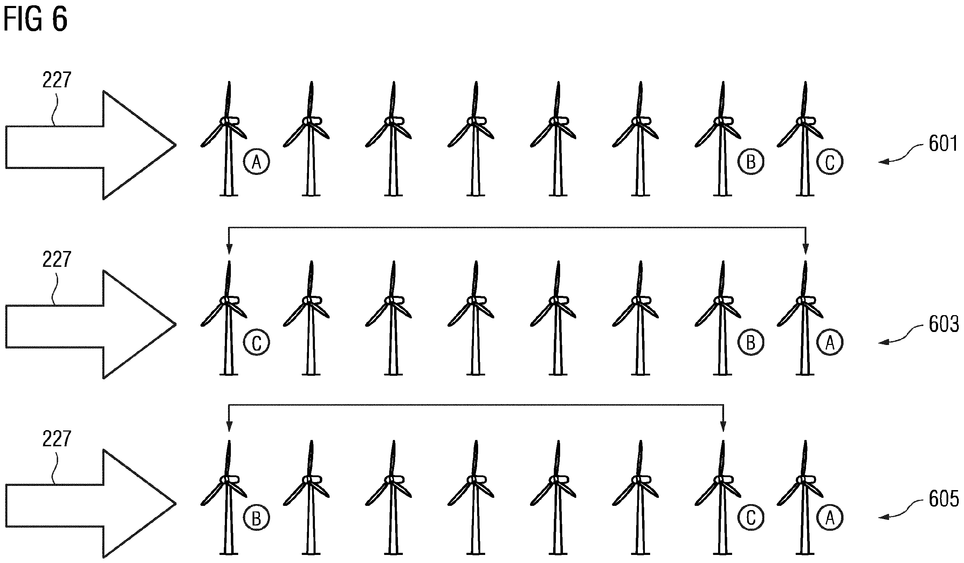

In fig. 6, turbines between highest and lowest loaded positions are swapped multiple times during the wind farm lifetime, ensuring that the same turbine doesn't take more than one round in a higher loaded position.

Row 601 shows a start arrangement, wherein row 603 shows a rearrangement after a first swap, and row 605 shows a rearrangement after a second swap.

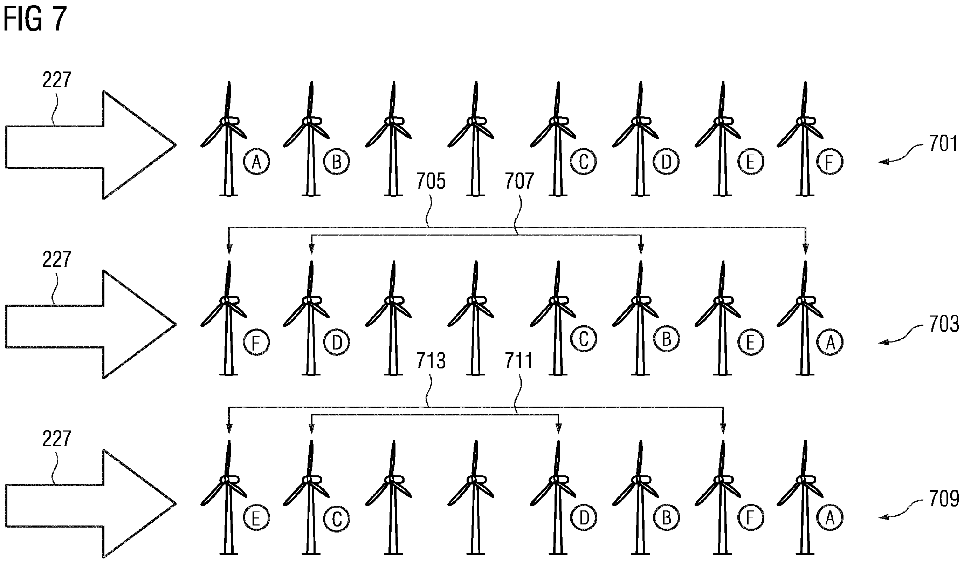

In fig. 7, wind turbines of multiple groups are swapped multiple times during the wind farm lifetime, ensuring that the same turbine doesn't take more than one round in a higher loaded position.

Row 701 shows a start arrangement, wherein row 703 shows a rearrangement after a first swap, indicated by arrow 705, and a second swap, indicated by arrow 707. Row 709 shows a rearrangement after a third swap, indicated by arrow 711, and a fourth swap, indicated by arrow 713.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims, such as the claimed wind farm, whereas other embodiments have been described with reference to method type claims, such as the claimed method. However, a person skilled in the art will gather from the above description that, unless noted otherwise, in addition to any combination of features belonging to one type of subject matter, any combination of features relating to different subject matters, in particular of features of the apparatus type claims and features of the method type claims, such as a combination of the claimed methods for running the claimed wind farm, is considered to be disclosed within this application as well.

## Claims

1. Method (100) for operating an offshore wind farm (200), comprising a plurality of floating offshore wind turbines (201 - 225, A - F), the method (100) comprising:
installing (101) the plurality of wind turbines (201 - 225, A - F) in a start arrangement, in which each wind turbine (201 - 225, A - F) faces a certain load with respect to a predominant wind direction;
rearranging (103) the plurality of wind turbines (201 - 225, A - F) by swapping positions of at least two wind turbines of the plurality of wind turbines (201 - 225, A - F),
wherein the at least two wind turbines comprise
a high performer wind turbine faced with the highest load of all wind turbines of the plurality of wind turbines (201 - 225, A - F) and
a low performer wind turbine faced with a load lower than the highest load of all wind turbines (201 - 225, A - F), such that a load over time is lowered for the high performer wind turbine compared to a load over time without swapping positions of the at least two wind turbines.

2. Method (100) according to claim 1, wherein rearranging comprises towing each of the at least two of the wind turbines (201 - 225, A - F) with at least one vessel or motor from a starting position to a target position.

3. Method (100) according to claim 1 or 2, wherein the at least two wind turbines comprise a number of first wind turbines facing the highest load of the plurality of wind turbines (201 - 225, A - F), the positions of which are swapped with a number of second wind turbines facing the lowest load of the plurality of wind turbines (201 - 225, A - F), such that each of the first wind turbines faces the highest load level within the plurality of wind turbines (201 - 225, A - F) only for a portion of the life of the wind farm (200).

4. Method (100) according to claim 1 or 2, wherein a number of wind turbines facing the highest load of the plurality of wind turbines (v) is split into different arrangement groups, wherein each arrangement group contains a number of wind turbines facing a lower load than the wind turbines facing the highest load of the plurality of wind turbines (201 - 225, A - F), such that swapping of turbines facing the highest load of the plurality of wind turbines (201 - 225, A - F) with each other is prevented.

5. Method (100) according to claim 1 or 2, wherein wind turbines are swapped in their positions multiple times during the lifetime of the wind farm.

6. Method (100) according to any of the preceding claims, wherein the load of each wind turbine is determined by using load sensors attached to the wind turbines and/or by using a mathematical model of the plurality of wind turbines (201 - 225, A - F) .

7. Method (100according to any of the preceding claims, wherein the at least two wind turbines to be swapped are selected from the plurality of wind turbines (201 - 225, A - F) such that a mechanical stress of all wind turbines of the plurality of wind turbines (201 - 225, A - F) is minimized.

8. Method (100) according to any of the preceding claims, swapping positions of at least two wind turbines of the plurality of wind turbines (201 - 225, A - F) includes towing at least one of the at least two wind turbines to a port for mechanical service.

9. Method (100) according to any of the preceding claims, wherein location identification marks of two wind turbines swapping positions are exchanged between these two wind turbines.

10. Method (100) according to any of the preceding claims, the method (100) further comprises constructing structural elements of each wind turbine of the wind farm (200) for a load lower than the highest load, in particular between 50 % and 90% of the highest load of all wind turbines of the wind farm (200).

11. Method (100) according to any of the preceding claims, the method (100) comprises the following steps:
generating, by the wind farm (200), electrical power and/or electrical energy;
transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction: and
supplying at least a part of the electrical power and/or of the electrical energy to an electrical utility grid, in particular to an onshore electrical utility grid.

12. Wind farm (200) comprising a plurality of floating offshore wind turbines (201 - 225, A - F), wherein structural elements of each wind turbine of the wind farm (200) are constructed for the same load, wherein the load is lower than the highest load of all wind turbines (201 - 225, A - F) of the wind farm (200), in particular between 50 % and 90% of the highest load of all wind turbines (201 - 225, A - F) of the wind farm (200).
